# EUROPÄISCHE PATENTSCHRIFT

(11) **EP 3 957 150 B1**
(45) Veröffentlichungstag und Bekanntmachung des Hinweises auf die Patenterteilung: **09.08.2023**
(21) Anmeldenummer: 21181127.8
(22) Anmeldetag: 23.06.2021
(51) Int. Cl.: A01D 34/23

(54) **SCHNEIDWERK**
CUTTING TOOL
BARRE DE COUPE

(30) Priorität: 19.08.2020 DE 102020121766
(43) Veröffentlichungstag der Anmeldung: 23.02.2022
(73) Patentinhaber: CLAAS Selbstfahrende Erntemaschinen GmbH, 33428 Harsewinkel (DE)
(72) Erfinder: Dudler, Heribert, 33428 Harsewinkel (DE); Köckemann, Josef, 33442 Herzebrock-Clarholz (DE); Tiemann, Robert, 32139 Spenge (DE); Eidhoff, Lukas, 33332 Gütersloh (DE)
(74) Vertreter: CLAAS Gruppe

(56) Entgegenhaltungen:
- EP-A1- 2 647 276
- EP-A2- 2 407 019
- CN-B- 107 258 210
- DE-U1-202016 100 325

## Beschreibung

Die vorliegende Erfindung betrifft ein Schneidwerk gemäß dem Oberbegriff des Anspruches 1. Ein derartiges Schneidwerk ist z.B. aus dem Dokument CN 107 258 210 B bekannt.

Aus dem Stand der Technik ist es hinlänglich bekannt, Schneidwerke, die üblicher Weise von sogenannten Mähdreschern aufgenommen werden, mit Seitenschneidwerken auszustatten. Derartige Seitenschneidwerke haben die Funktion, den von dem jeweiligen Schneidwerk zu erntenden Getreidebestand so in vertikaler Richtung freizuschneiden, dass die Schneid- und Förderorgane des Schneidwerks den abzuerntenden Bestand problemlos schneiden, aufnehmen und abfördern können. Insbesondere werden derartige Seitenschneidwerke bei der Ernte von Raps eingesetzt, da erntereife Rapspflanzen untereinander extrem verschlungen sind. Üblicher Weise werden Seitenschneidwerke entweder beidseitig oder nur einseitig an dem jeweiligen Schneidwerk angeordnet. Typischer Weise sind Seitenschneidwerke so aufgebaut, dass gegeneinander oszillierende Trennmesser von einer Balkenstruktur, einer sogenannten Balkenschiene, aufgenommen werden, wobei jedes der oszillierenden Trennmesser mittels Koppelstangen in eine Oszillationsbewegung versetzt wird. So ist etwa aus EP 2 647 276 A1 eine Struktur bekannt, bei der die Koppelstangen nahezu mittig an dem jeweiligen Trennmesser angreifen, sodass die an den Trennmessern während des Betriebes auftretenden Reaktionskräfte über lange Wege in die kraftaufnehmenden Strukturen weitergeleitet werden müssen. Dies führt zu hohen, den Verschleiß fördernden Belastungen an den kraftübertragenden Elementen. Zudem steigern lange Kraftübertragungswege auch das Schwingverhalten der Seitenschneidwerke.

Zur Reduzierung des Schwingverhaltens schlägt die EP 2 407 019 A1 vor, die die Schneidmesser tragende Balkenschiene des Seitenschneidwerkes als Schwingungsdämpfer auszubilden, indem sie als teilweise geöffnetes Hohlprofil ausgeführt ist. Dieses teilweise geschlitzte Hohlprofil hat jedoch den Nachteil, dass im Vergleich zu einer geschlossenen Profilstruktur eine geringere Stabilität aufweist, sodass entweder nur geringe Lasten übertragen werden können oder das Profil entsprechend dickwandig ausgeführt werden muss, was zugleich die Masse des Seitenschneidwerks erhöht.

Es ist deshalb Aufgabe der Erfindung, die beschriebenen Nachteile des Standes der Technik zu vermeiden und insbesondere ein Seitenschneidwerk vorzuschlagen, welches gegenüber den bekannten Lösungen eine effizientere Einleitung von Lasten in die Tragstruktur ermöglicht und ein reduziertes Schwingverhalten des Seitenschneidwerks aufweist.

Die vorstehende Aufgabe wird bei einem Schneidwerk gemäß dem Oberbegriff von Anspruch 1 durch die Merkmale des kennzeichnenden Teils von Anspruch 1 gelöst. Vorteilhafte Weiterbildungen sind Gegenstand der Unteransprüche.

Gemäß dem Anspruch 1 wird ein Schneidwerk vorgeschlagen, mit einem Rahmen und einer daran angeordneten Schneidwerksmulde, einem der Schneidwerksmulde vorgeordneten Schneidtisch mit einem daran angeordneten oszillierend angetriebenen Messerbalken, einer rotativ angetriebenen Haspel, die mittels Tragarmen an der Schneidwerksmulde geführt und gegenüber dieser in oder entgegen einer Mährichtung verstellbar ist, sowie zumindest einem endseitig an dem Rahmen lösbar angeordneten Seitenschneidwerk, welches sich im Wesentlichen vertikal zu dem Messerbalken erstreckt, wobei das Seitenschneidwerk eine an einem Tragrahmen angeordnete Balkenschiene umfasst, wobei die Balkenschiene in Längsrichtung zumindest ein oszillierend angetriebenes Trennmesser mittels Messerhalteeinrichtungen abstützt und dass die Balkenschiene mit einem Ende mit einem die oszillierende Antriebsbewegung des zumindest einen Trennmessers bewirkenden, mit dem Messerbalken verbundenen Abtrieb durch eine Antriebsvorrichtung gekoppelt ist. Erfindungsgemäß ist vorgesehen, dass das Seitenschneidwerk zumindest ein erstes Lagerungselement und ein zweites Lagerungselement aufnimmt, wobei das zumindest eine erste Lagerungselement eingerichtet ist, an dem zumindest einen oszillierenden Trennmesser auftretende Kräfte über die Länge der Balkenschiene verteilt aus dieser in den Tragrahmen abzuleiten, und dass das zumindest eine zweite Lagerungselement eingerichtet sind, die von dem Messerbalken auf das Seitenschneidwerk übertragenen Schwingungen zumindest zu dämpfen.

Insbesondere kann das Seitenschneidwerk zwei als Doppelmesser angeordnete Trennmesser aufweisen, denen jeweils ein erstes Lagerungselement zugeordnet ist. Bei einer Ausführung als Doppelmesser wird jedes Trennmesser durch die Antriebsvorrichtung gegensinnig bewegt. Entsprechend ist jedem Trennmesser ein erstes Lagerungselement zugeordnet, um die an dem jeweiligen oszillierenden Trennmesser auftretenden Kräfte über die Länge der Balkenschiene verteilt abzuleiten.

Bevorzugt kann das zumindest eine erste Lagerungselement als eine parallel zur Balkenschiene verlaufende Linearführung ausgeführt sein, an der ein der Übertragung der oszillierenden Antriebsbewegung dienendes Übertragungselement des Seitenschneidwerks in axialer Richtung geführt ist.

Dabei kann das zumindest eine erste Lagerungselement die Anzahl der Freiheitsgrade der Balkenschiene auf zwei Translationsfreiheitsgrade beschränken. Dadurch kann insbesondere im Fall einer Überlastung eine Einleitung eines Biegemoments in die Balkenschiene sowie in Lagerstellen von Koppelstangen der Antriebsvorrichtung vermieden werden. Im Betrieb können Kräfte, die auf Führungsmittel des jeweiligen Trennmessers sowie die Lagerstellen Koppelstangen der Antriebsvorrichtung einwirken, reduziert werden. Insbesondere quer zur Längserstreckung der Balkenschiene auftretende Kräfte können von dem zumindest einen ersten Lagerungselement aufgenommen und in den Tragrahmen abgeleitet werden.

Insbesondere kann das erste Lagerungselement eine Führungsstange aufweisen, entlang der das Übertragungselement in axialer Richtung gleitet, wobei die Führungsstange an ihren gegenüberliegenden Enden an dem Tragrahmen fixiert ist. Das erste Lagerungselement ist vorzugsweise im unteren Drittel der Balkenschiene angeordnet, um im Fall einer mechanischen Überlastung der Antriebsvorrichtung einen möglichst kurzen Hebel zu haben.

Hierzu kann das erste Lagerungselement zwei Befestigungspunkte umfassen, zwischen denen die Führungsstange angeordnet ist, wobei die Befestigungspunkte in einem Abstand zueinander an dem Tragrahmen angeordnet sind.

Dabei sollte der Abstand der Befestigungspunkte zueinander größer als die Amplitude der oszillierenden Bewegung des Trennmessers sein, um ein Anschlagen des Übertragungselementes an einen der Befestigungspunkte zu vermeiden.

Weiterhin kann das zumindest eine zweite Lagerungselement als ein Gummilager ausgeführt sein.

Bevorzugt kann das Gummilager eine äußere Hülse und eine innere Hülse aus Metall aufweisen, zwischen denen ein gummielastischer Werkstoff eingepresst oder einvulkanisiert ist.

Vorzugsweise kann der Tragrahmen im Wesentlichen dreieckförmig ausgebildet sein, wobei ein Rahmensegment unter einem Winkel zur Balkenschiene geneigt angeordnet ist und sich von einem unteren Anlenkpunkt in Richtung eines oberen Anlenkpunktes am Tragrahmen erstreckt. Der Tragrahmen kann dazu insbesondere die Form eines im Wesentlichen rechtwinkligen Dreiecks aufweisen. Hierzu kann der Tragrahmen einen im Wesentlichen horizontal verlaufenden Rahmenabschnitt sowie einen zu diesem sich senkrecht erstreckenden vertikal verlaufenden Rahmenabschnitt aufweisen.

Bevorzugt kann das zumindest eine zweite Lagerungselement an dem Rahmensegment unterhalb eines Übergangsbereichs, in welchem das Rahmensegment und ein Rahmenabschnitt des Tragrahmens miteinander verbunden sind, angeordnet sein. Insbesondere kann das zumindest eine zweite Lagerungselement am freien Ende des Rahmensegmentes unterhalb des oberen Befestigungspunktes des ersten Lagerungselementes angeordnet sein.

Insbesondere kann das zumindest eine zweite Lagerungselement zur Aufnahme eines Stiftes oder Bolzens eingerichtet sein, welcher der Ausrichtung des Tragrahmens gegenüber dem Rahmen des Schneidwerks dient. Zudem kann hierdurch eine flexible Verbindung zwischen dem Seitenschneidwerk und dem Schneidtisch bzw. Rahmen des Schneidwerks erreicht werden. Durch die flexible Verbindung kann die Übertragung von Vibrationen, die durch den oszillierend angetriebenen Messerbalken erzeugt werden, auf das Seitenschneidwerk zumindest reduziert oder vermieden werden.

Weiterhin kann die Antriebsvorrichtung eine Antriebswelle umfassen, an der endseitig ein zweiseitiger Hebel angeordnet ist, dem zur Begrenzung einer durch die Antriebswelle übertragenen Pendelbewegung ein mechanischer Endanschlag zugeordnet ist. Mittels des mechanischen Endanschlages kann die Ausrichtung der Antriebsvorrichtung beim Verbinden mit dem Abtrieb des Schneidwerks vorgegeben werden. Hierdurch wird der Vorgang der Anbringung des oder der Seitenschneidwerke an dem Schneidwerk vereinfacht. Darüber hinaus werden Kräfte reduziert, die auf die Koppelstangen und deren Lagerstellen einwirken. Besonders vorteilhaft ist dies in einer Überlastsituation, in der eine Überlastsicherung, wie beispielsweise eine Überlastkupplung, ausgelöst wurde. Unkontrollierten Bewegungen der Koppelstangen aufgrund der Massenträgheit der Trennmesser kann dadurch begegnet werden.

Insbesondere kann der zwei Arme aufweisende Hebel im Wesentlichen rautenförmig ausgeführt sein und der Endanschlag kann zwei einander gegenüberliegende, geneigte Anschlagflächen aufweisen, deren Neigung korrespondierend mit den Neigungen der Arme des zweiseitigen Hebels ausgeführt ist. Somit kann der jeweilige Arm flächig an der diesem zugewandten Anschlagfläche des Endanschlags anliegen. Eine lediglich punktuelle Belastung der Arme bzw. der Anschlagflächen wird dadurch vermieden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Teilansicht eines Schneidwerks mit einem daran angeordneten Seitenschneidwerk;
- Fig. 2: schematisch und exemplarisch eine perspektivische Teilansicht eines unteren Bereichs eines Tragrahmens des Seitenschneidwerks;
- Fig. 3: schematisch und exemplarisch eine perspektivische eines oberen Bereichs des Tragrahmens gemäß Fig. 2;
- Fig. 4: schematisch und exemplarisch eine frontale Ansicht des unteren Bereichs des Tragrahmens gemäß Fig. 2; und
- Fig. 5: schematisch und exemplarisch eine Detailansicht des unteren Bereichs des Tragrahmens gemäß Fig. 2.

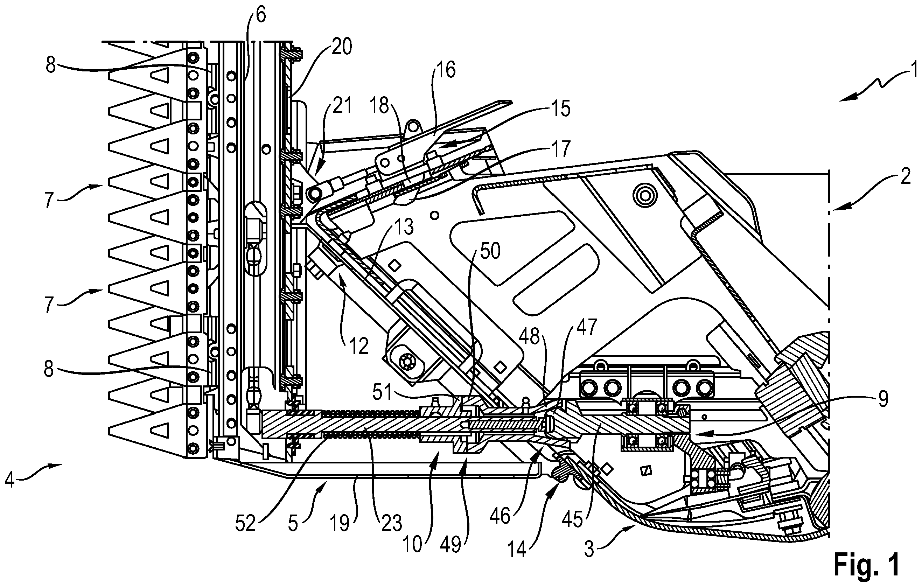

In Fig. 1 ist schematisch und exemplarisch eine Teilansicht eines Schneidwerks 1 mit zumindest einem daran angeordneten Seitenschneidwerk 4 dargestellt. Das Schneidwerk 1 wird von einem - nicht dargestellten - Mähdrescher aufgenommen und durch diesen mechanisch und/oder hydraulisch angetrieben. Hierzu wird das Schneidwerk 1 mit einem mechanischen Antriebsstrang des Mähdreschers gekoppelt. Zudem kann eine Anbindung des Schneidwerks 1 an ein Hydrauliksystem des Mähdreschers vorgesehen sein, um Komponenten des Schneidwerks 1, wie beispielsweise eine - nicht dargestellte- Haspel, hydraulisch anzutreiben. Das Schneidwerk 1 umfasst einen Rahmen 2 und eine daran angeordnete Schneidwerksmulde. Der Schneidwerksmulde ist dem Schneidtisch vorgeordnet. Die Haspel ist mittels Tragarmen an der Schneidwerksmulde geführt und gegenüber dieser in oder entgegen einer Mährichtung verstellbar. An dem Schneidtisch ist ein oszillierend angetriebener Messerbalken 3 angeordnet.

Das zumindest eine Seitenschneidwerk 4 ist endseitig an dem Rahmen 2 lösbar angeordnet. Das Seitenschneidwerk 4 erstreckt sich im Wesentlichen vertikal zu dem Messerbalken 3. Mittels des Seitenschneidwerks 4 wird stark in sich verschlungenes Erntegut, wie insbesondere Raps, aber auch Bohnen oder unter bestimmten Umständen auch Getreide, in einer vertikalen Ebene voneinander getrennt, bevor der Messerbalken 3 das Erntegut abtrennt. Dies dient dazu, Erntegutverluste zu vermeiden.

Das zumindest eine Seitenschneidwerk 4 umfasst eine an einem Tragrahmen 5 angeordnete Balkenschiene 6. Das Seitenschneidwerk 4 ist mittels des Tragrahmens 5 lösbar an einem äußeren Ende des Rahmens 2 des Schneidwerks 1 anbringbar. Die Balkenschiene 6 stützt in Längsrichtung zumindest ein oszillierend angetriebenes Trennmesser 7 mittels Messerhalteeinrichtungen 8 ab. Im dargestellten Ausführungsbeispiel sind zwei Trennmesser 7 parallel zueinander angeordnet. Die beiden Trennmesser 7 werden gegensinnig angetrieben. An zumindest einem äußeren Ende des Messerbalkens 3 ist ein Abtrieb 9 angeordnet, der die oszillierende Antriebsbewegung auf den Messerbalken 3 überträgt. Im Fall von beidseitig am äußeren Ende des Rahmen 2 des Schneidwerks 1 angeordneten Seitenschneidwerken 4 ist jeweils ein Abtrieb 9 vorgesehen.

Die Balkenschiene 6 ist an einem Ende mit dem die oszillierende Antriebsbewegung des zumindest einen Trennmessers 7 bewirkenden Abtrieb 9 an dem Messerbalken 3 durch eine Antriebsvorrichtung 10 gekoppelt. Vorzugsweise ist die Antriebsvorrichtung 10 an einem dem Messerbalken 3 zugewandten unteren Ende der Balkenschiene 6 angeordnet. Hierdurch ist der Kraftübertragungsweg zwischen dem Abtrieb 9 über die Antriebsvorrichtung 10 auf die Balkenschiene 6 kurzgehalten.

Der Tragrahmen 5 ist im Wesentlichen dreieckförmig ausgebildet. Der Tragrahmen 5 weist hier und vorzugsweise im Wesentlichen die Form eines rechtwinkligen Dreiecks auf. Der Tragrahmen 5 umfasst ein Rahmensegment 13, welches unter einem Winkel zum Trennmesser 7 geneigt angeordnet ist. Das Rahmensegment 13 erstreckt sich von einem unteren Anlenkpunkt 14 in Richtung eines oberen Befestigungspunktes 15 am Rahmen 2 des Schneidwerks 1. Die Darstellung in Fig. 1 zeigt das Seitenschneidwerk 4 in seiner an dem Schneidwerk 1 arretierten Position. Hierzu ist ein Schnellspannverschluss 16 an dem Tragrahmen 5 angeordnet, welcher mit dem Rahmen 2 des Schneidwerks 1 lösbar verbunden ist. Der Schnellspannverschluss 16 weist einen hakenförmigen Abschnitt 17 auf, welcher mit einer korrespondierenden Ausnehmung 18 im Rahmen 2 in Eingriff bringbar ist. Der Schnellspannverschluss 16 kann als eine Art Kniehebelanordnung ausgeführt sein. Der zur Fixierung des Tragrahmens 5 in die Ausnehmung 18 eingreifende hakenförmigen Abschnitt 17 ermöglicht eine spielfreie und drehmomentsteife Verbindung des Tragrahmens 5 am Rahmen 2.

Der Tragrahmen 5 weist einen sich im Wesentlichen in horizontaler Richtung erstreckenden Rahmenabschnitt 19 auf, der etwas oberhalb des unteren Anlenkpunktes 14 verläuft. Oberhalb des Rahmenabschnitts 19 befinden sich die Komponenten der Antriebsvorrichtung 10. Im Wesentlichen senkrecht zu dem Rahmenabschnitt 19 erstreckt sich ein weiterer Rahmenabschnitt 20. Das Rahmensegment 13 ist endseitig mit dem Rahmenabschnitt 19 bzw. dem Rahmenabschnitt 20 verbunden. Der Schnellspannverschluss 16 ist an dem sich im Wesentlichen in vertikaler Richtung erstreckenden Rahmenabschnitt 20 in einem oberen Anlenkpunkt 21 angelenkt. Der obere Anlenkpunkt 21 liegt oberhalb des Bereichs, in dem das Rahmensegment 13 endseitig mit dem Rahmenabschnitt 20 verbunden ist.

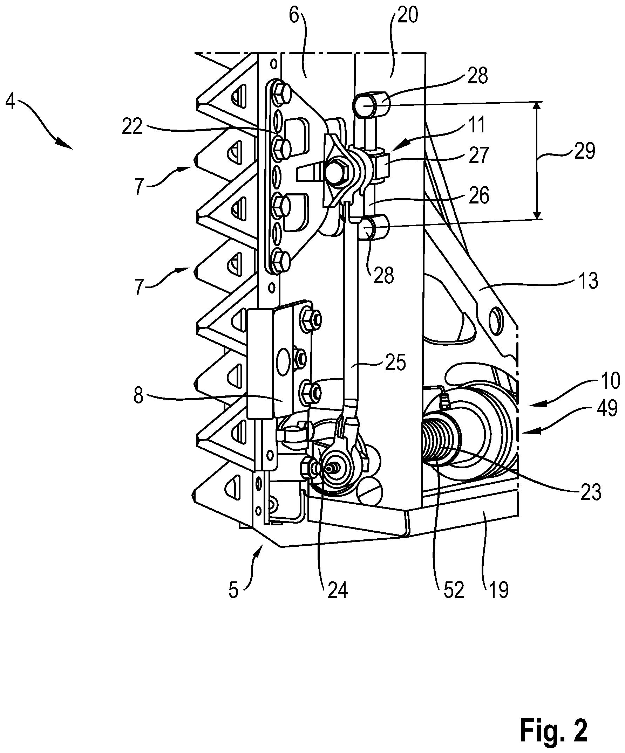

Das Seitenschneidwerk 4 nimmt zumindest ein erstes Lagerungselement 11 und ein zweites Lagerungselement 12 auf. Das zumindest eine erste Lagerungselement 11 ist dazu eingerichtet, an dem zumindest einen oszillierenden Trennmesser 7 auftretende Kräfte über die Länge der Balkenschiene 6 verteilt aus dieser in den Tragrahmen 5 abzuleiten, was nachfolgend anhand der Fig. 2 bis 5 näher erläutert wird. Das zumindest eine zweite Lagerungselement 12 ist dazu eingerichtet, die von dem Messerbalken 3 auf das Seitenschneidwerk 4 übertragenen Schwingungen zumindest zu dämpfen.

Der Abtrieb 9 weist eine Abtriebswelle 45 auf, an der endseitig ein erstes Kupplungselement 47 einer ersten Kupplung 46 angeordnet ist. Die Antriebsvorrichtung 10 weist ein korrespondierendes zweites Kupplungselement 48 der ersten Kupplung 46 auf, welches mit dem ersten Kupplungselement 47, insbesondere formschlüssig, in Eingriff bringbar ist. Vorzugsweise weisen das erste Kupplungselement 47 und das zweite Kupplungselement 48 in Umfangsrichtung unter einem Winkel versetzt angeordnete axiale Aussparungen bzw. sich radial nach außen erstreckende Vorsprünge auf. Insbesondere sind die Vorsprünge des ersten Kupplungselements 47 und die Aussparungen des zweiten Kupplungselements 48 unter einem Winkel von etwa 120° zueinander versetzt angeordnet. Somit können die beiden Kupplungselemente 47, 48 der ersten Kupplung 46 nur in einer spezifischen Stellung von Antriebswelle 23 und Abtriebswelle 45 in Eingriff gebracht werden.

Die Antriebsvorrichtung 10 weist eine zweite Kupplung 49 auf, die als Überlastkupplung ausgeführt ist. Die zweite Kupplung 49 umfasst ein erstes Kupplungselement 50 und ein zweites Kupplungselement 51, die fluchtend auf einem gemeinsamen Schaft, hier und vorzugsweise der Antriebswelle 23, angeordnet sind. Auf der sich an das zweite Kupplungselement 51 anschließenden Antriebswelle 23 ist eine Druckfeder 52 koaxial angeordnet. Die Druckfeder 52 stützt sich an einem radialen Absatz auf der Antriebswelle 23 sowie an einem Gehäuseabschnitt der zweiten Kupplung 49 ab. Mittels der Druckfeder 52 wird die zweite Kupplung 49 beim Anbau des Seitenschneidwerks 4 vorgespannt.

Die Darstellung in Fig. 2 zeigt schematisch und exemplarisch eine perspektivische Teilansicht eines unteren Bereichs des Tragrahmens 5 des Seitenschneidwerks 4. An einer Antriebswelle 23 der Antriebsvorrichtung 10 ist ein zweiseitiger Hebel 24 angeordnet. An den freien Enden des zweiseitigen Hebels 24 sind zwei Koppelstangen 25 beabstandet zueinander und exzentrisch zur Längsachse der Antriebswelle 23 an dem Hebel 24 angelenkt. Am gegenüberliegenden Ende der jeweilige Koppelstange 25 ist ein Übertragungselement 22 angeordnet, welches der Übertragung der oszillierenden Antriebsbewegung auf die Balkenschiene 6 dient.

Das zumindest eine erste Lagerungselement 11 ist als eine parallel zur Balkenschiene 6 verlaufende Linearführung ausgeführt. Das Übertragungselement 22 und die Koppelstange 25 werden von dem ersten Lagerungselement 11 in axialer Richtung geführt. Das jeweilige erste Lagerungselement 11 weist eine Führungsstange 26 auf, die achsparallel zu der Balkenschiene 6 angeordnet ist. Entlang der Führungsstange 26 gleiten das Übertragungselement 22 und die daran angeordnete Koppelstange 25 in axialer Richtung auf und ab. Hierzu ist ein Führungselement 27 vorgesehen, welches die Führungsstange 26 formschlüssig umschließt. An dem Führungselement 27 ist die Koppelstange 25 an einer zu der Führungsstange 26 senkrecht verlaufenden Achse angelenkt. Die Führungsstange 26 ist an ihren gegenüberliegenden Enden an dem Tragrahmen 5 fixiert. Hierzu umfasst das erste Lagerungselement 11 zwei Befestigungspunkte 28, zwischen denen die Führungsstange 26 angeordnet ist. Die Befestigungspunkte 28 sind in einem Abstand 29 zueinander an dem Tragrahmen 5 angeordnet, wobei der Abstand 29 der Befestigungspunkte 28 zueinander größer als die Amplitude der oszillierenden Bewegung des Trennmessers 7 ist.

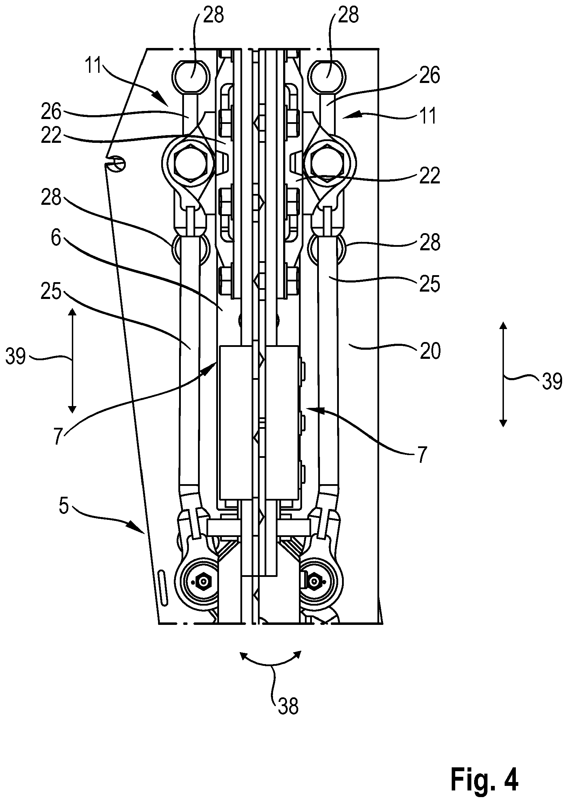

Das Seitenschneidwerk 4 gemäß Fig. 2 weist zwei als Doppelmesser angeordnete Trennmesser 7 auf, denen jeweils ein erstes Lagerungselement 11 zugeordnet ist, wie aus Fig. 4 ersichtlich ist. Das jeweilige erste Lagerungselement 11 beschränkt die Anzahl der Freiheitsgrade der damit verbunden Koppelstange 25 und damit des Übertragungselements 22 und der daran angeordneten Balkenschiene 6 auf zwei Translationsfreiheitsgrade.

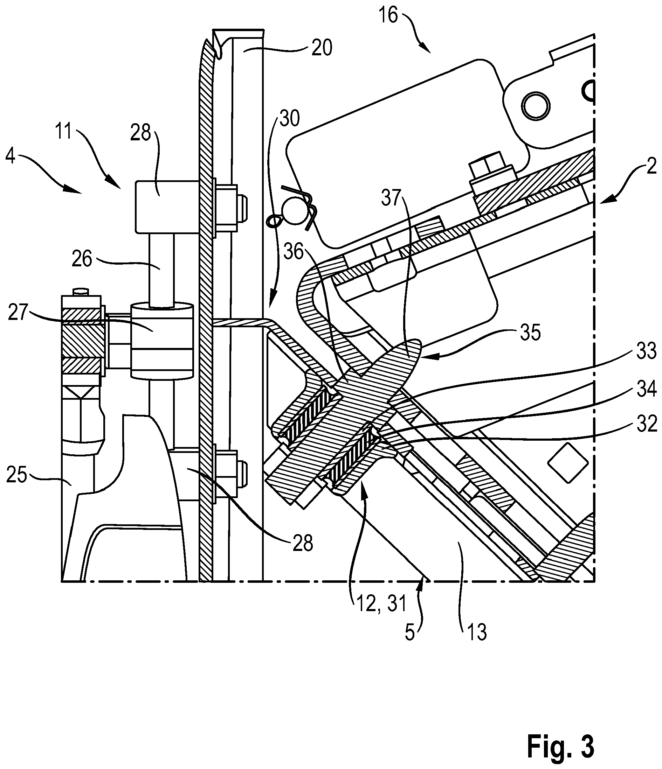

In Fig. 3 ist schematisch und exemplarisch eine perspektivische eines oberen Bereichs des Tragrahmens 5 gemäß Fig. 2 dargestellt. An dem Rahmensegment 13 ist unterhalb eines Übergangsbereichs 30, in welchem das Rahmensegment 13 und der Rahmenabschnitt 20 miteinander verbunden sind, das zweite Lagerungselement 12 angeordnet. Insbesondere ist das zumindest eine zweite Lagerungselement 12 am freien Ende des Rahmensegmentes 13 unterhalb des oberen Befestigungspunktes 28 des ersten Lagerungselementes 11 angeordnet. Das zumindest eine zweite Lagerungselement 12 ist als ein Gummilager 31 ausgeführt. Das Gummilager 31 weist eine äußere Hülse 32 und eine innere Hülse 31 jeweils aus Metall auf, zwischen denen ein gummielastischer Werkstoff 34 eingepresst oder einvulkanisiert ist.

Das zumindest eine zweite Lagerungselement 12 dient dabei der Aufnahme eines Stiftes oder Bolzens 35, durch welchen der Tragrahmen 5 gegenüber dem Rahmen 2 des Schneidwerks 1 bei der Anordnung des Seitenschneidwerks 4 ausgerichtet wird. Dem Stift oder Bolzen 35 kommt dabei eine Zentrierfunktion zu. Der Stift oder Bolzen 35 kann einen radialen, ringförmigen Absatz 36 aufweisen, der als Anschlag zwischen dem Rahmensegment 13 und dem Rahmen 2 fungiert. Mit seinem freien Ende 37 greift der Stift oder Bolzen 35 in eine korrespondierende Öffnung am Rahmen 2 ein, wie in Fig. 3 angedeutet. Das freie Ende 37 kann dabei sich verjüngend ausgeführt sein.

In Fig. 4 ist schematisch und exemplarisch eine frontale Ansicht des unteren Bereichs des Tragrahmens 5 gemäß Fig. 2 dargestellt. Entsprechend der Anzahl an Trennmessern 7 des Seitenschneidwerks 4 sind zwei erste Lagerungselemente 11 parallel zueinander und auf gleicher Höhe an dem vertikalen Rahmenabschnitt 20 angeordnet. Eine durch den Abtrieb 9 auf die Antriebsvorrichtung 10 übertragene Pendelbewegung 38 um die Längsachse der Antriebswelle 23 wird durch den zweiseitigen Hebel 24 und die daran angeordneten Koppelstangen 25 in eine durch das jeweilige erste Lagerungselement 11 geführte Linearbewegung 39 der Trennmesser 7 überführt.

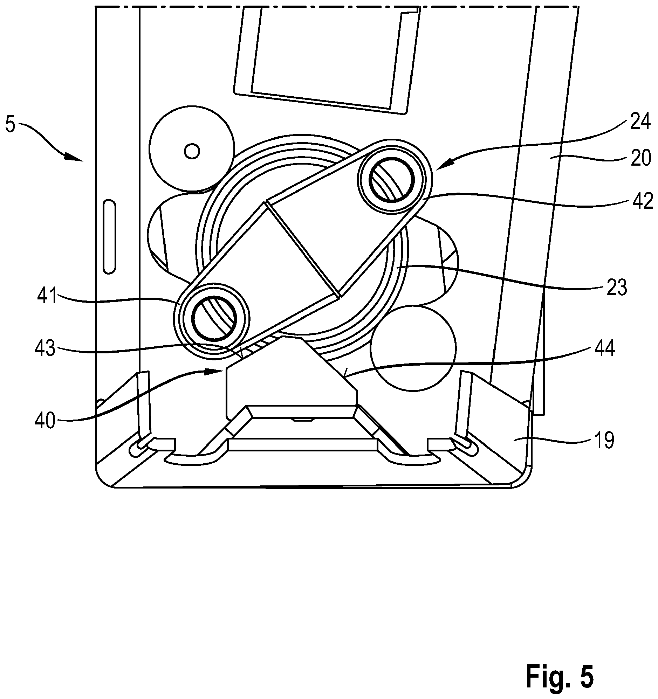

Die Darstellung in Fig. 5 zeigt schematisch und exemplarisch eine Detailansicht des unteren Bereichs des Tragrahmens 5 gemäß Fig. 2. In der Darstellung ist von der Antriebsvorrichtung 10 lediglich der an der Antriebswelle 23 angeordnete zweiseitige Hebel 24 gezeigt. Die daran angeordneten Koppelstangen 25 sind aus Vereinfachungsgründen nicht dargestellt. Dem zweiseitigen Hebel 24 ist zur Begrenzung der durch die Antriebswelle 23 erzeugten Schwenkbewegung ein mechanischer Endanschlag 40 zugeordnet ist. Der zwei Arme 41,42 aufweisende Hebel 24 ist im Wesentlichen rautenförmig ausgeführt. Die Arme 41, 42 verjüngen sich zu ihren freien Enden hin, an denen die jeweilige Koppelstange 25 angelenkt ist. Der Endanschlag 40 weist zwei einander gegenüberliegende, geneigte Anschlagflächen 43, 44 auf, deren Neigung korrespondierend mit den Neigungen der Arme 41, 42 des zweiseitigen Hebels 24 ausgeführt ist, die den Anschlagflächen 43, 44 zugewandt sind. Die Anschlagflächen 43, 44 dienen dazu, die Pendelbewegung 38 zu begrenzen. Mittels des mechanischen Endanschlages 40 kann die Ausrichtung der Antriebsvorrichtung 10 beim Verbinden mit dem Abtrieb 9 am Messerbalken 3 des Schneidwerks 1 vorgegeben werden. Hierdurch wird der Vorgang der Anbringung des oder der Seitenschneidwerke 4 an dem Schneidwerk 1 vereinfacht. Darüber hinaus werden Kräfte reduziert, die auf die Koppelstangen 25 und deren Lagerstellen einwirken.

### Bezugszeichenliste

| | | | |
|---|---|---|---|
| 1 | Schneidwerk | 34 | Gummielastischer Werkstoff |
| 2 | Rahmen | 35 | Stift oder Bolzen |
| 3 | Messerbalken | 36 | Absatz |
| 4 | Seitenschneidwerk | 37 | Freies Ende von 35 |
| 5 | Tragrahmen | 38 | Pendelbewegung |
| 6 | Balkenschiene | 39 | Linearbewegung |
| 7 | Trennmesser | 40 | Endanschlag |
| 8 | Messerhalteeinrichtung | 41 | Arm von 24 |
| 9 | Abtrieb | 42 | Arm von 24 |
| 10 | Antriebsvorrichtung | 43 | Anschlagfläche |
| 11 | Erstes Lagerungselement | 44 | Anschlagfläche |
| 12 | Zweites Lagerungselement | 45 | Abtriebswelle |
| 13 | Rahmensegment | 46 | Erste Kupplung |
| 14 | Anlenkpunkt | 47 | Erstes Kupplungselement |
| 15 | Befestigungspunkt | 48 | Zweites Kupplungselement |
| 16 | Schnellspannvorrichtung | 49 | Zweite Kupplung |
| 17 | Hakenförmiger Abschnitt | 50 | Erstes Kupplungselement |
| 18 | Ausnehmung | 51 | Zweites Kupplungselement |
| 19 | Rahmenabschnitt | 52 | Druckfeder |
| 20 | Rahmenabschnitt | | |
| 21 | Anlenkpunkt | | |
| 22 | Übertragungselement | | |
| 23 | Antriebswelle | | |
| 24 | Hebel | | |
| 25 | Koppelstange | | |
| 26 | Führungsstange | | |
| 27 | Führungselement | | |
| 28 | Befestigungspunkt | | |
| 29 | Abstand | | |
| 30 | Übergangsbereich | | |
| 31 | Gummilager | | |
| 32 | Äußere Hülse | | |
| 33 | Innere Hülse | | |

## Patentansprüche

1. Schneidwerk (1), mit einem Rahmen (2) und einer daran angeordneten Schneidwerksmulde, einem der Schneidwerksmulde vorgeordneten Schneidtisch mit einem daran angeordneten oszillierend angetriebenen Messerbalken (3), einer rotativ angetriebenen Haspel, die mittels Tragarmen an der Schneidwerksmulde geführt und gegenüber dieser in oder entgegen einer Mährichtung verstellbar ist, sowie zumindest einem endseitig an dem Rahmen (2) lösbar angeordneten Seitenschneidwerk (4), welches sich im Wesentlichen vertikal zu dem Messerbalken (3) erstreckt, wobei das Seitenschneidwerk (4) eine an einem Tragrahmen (5) angeordnete Balkenschiene (6) umfasst, wobei die Balkenschiene (6) in Längsrichtung zumindest ein oszillierend angetriebenes Trennmesser (7) mittels Messerhalteeinrichtungen (8) abstützt und mit einem Ende mit einem die oszillierende Antriebsbewegung des zumindest einen Trennmessers (7) bewirkenden, mit dem Messerbalken (3) verbundenen Abtrieb (9) durch eine Antriebsvorrichtung (10) gekoppelt ist, wobei das Seitenschneidwerk (4) zumindest ein erstes Lagerungselement (11) aufnimmt, wobei das zumindest eine erste Lagerungselement (11) eingerichtet ist, an dem zumindest einen oszillierenden Trennmesser (7) auftretende Kräfte über die Länge der Balkenschiene (6) verteilt aus dieser in den Tragrahmen (5) abzuleiten, **dadurch gekennzeichnet, dass** das Seitenschneidwerk (4) zumindest ein zweites Lagerungselement (12) aufnimmt, wobei das zumindest eine zweite Lagerungselement (12) eingerichtet ist, die von dem Messerbalken (3) auf das Seitenschneidwerk (4) übertragenen Schwingungen zumindest zu dämpfen.

2. Schneidwerk (1) nach Anspruch 1, **dadurch gekennzeichnet, dass** das Seitenschneidwerk (4) zwei als Doppelmesser angeordnete Trennmesser (7) aufweist, denen jeweils ein erstes Lagerungselement (11) zugeordnet ist.

3. Schneidwerk (1) nach Anspruch 1 oder 2, **dadurch gekennzeichnet, dass** das zumindest eine erste Lagerungselement (11) als eine parallel zur Balkenschiene (6) verlaufende Linearführung ausgeführt ist, an der ein der Übertragung der oszillierenden Antriebsbewegung dienendes Übertragungselement (22) des Seitenschneidwerks (4) in axialer Richtung geführt ist.

4. Schneidwerk (1) nach Anspruch 3, **dadurch gekennzeichnet, dass** das zumindest eine erste Lagerungselement (11) die Anzahl der Freiheitsgrade der Balkenschiene (6) auf zwei Translationsfreiheitsgrade beschränkt.

5. Schneidwerk (1) nach Anspruch 3 oder 4, **dadurch gekennzeichnet, dass** das erste Lagerungselement (11) eine Führungsstange (26) aufweist, entlang der das Übertragungselement (22) in axialer Richtung gleitet, wobei die Führungsstange (26) an ihren gegenüberliegenden Enden an dem Tragrahmen (5) fixiert ist.

6. Schneidwerk (1) nach Anspruch 5, **dadurch gekennzeichnet, dass** das erste Lagerungselement (11) zwei Befestigungspunkte (28) umfasst, zwischen denen die Führungsstange (26) angeordnet ist, wobei die Befestigungspunkte (28) in einem Abstand (29) zueinander an dem Tragrahmen (5) angeordnet sind.

7. Schneidwerk (1) nach Anspruch 6, **dadurch gekennzeichnet, dass** der Abstand (29) der Befestigungspunkte (28) zueinander größer ist als die Amplitude der oszillierenden Bewegung des Trennmessers (7).

8. Schneidwerk (1) nach einem der vorangehenden Ansprüche, **dadurch gekennzeichnet, dass** das zumindest eine zweite Lagerungselement (12) als ein Gummilager ausgeführt ist.

9. Schneidwerk (1) nach Anspruch 8, **dadurch gekennzeichnet, dass** das zweite Lagerungselement (12) eine äußere Hülse (32) und eine innere Hülse (33) aus Metall aufweist, zwischen denen ein gummielastischer Werkstoff (34) eingepresst oder einvulkanisiert ist.

10. Schneidwerk (1) nach einem der vorangehenden Ansprüche, **dadurch gekennzeichnet, dass** der Tragrahmen (5) im Wesentlichen dreieckförmig ausgebildet ist, wobei ein Rahmensegment (13) unter einem Winkel zur Balkenschiene (6) geneigt angeordnet ist und sich von einem unteren Anlenkpunkt (14) in Richtung eines oberen Anlenkpunktes (21) am Tragrahmen (5) erstreckt.

11. Schneidwerk (1) nach Anspruch 10, **dadurch gekennzeichnet, dass** das zumindest eine zweite Lagerungselement (12) an dem Rahmensegment (13) unterhalb eines Übergangsbereichs (30), in welchem das Rahmensegment (13) und ein Rahmenabschnitt (20) des Tragrahmens (5) miteinander verbunden sind, angeordnet ist.

12. Schneidwerk (1) nach Anspruch 11, **dadurch gekennzeichnet, dass** das zumindest eine zweite Lagerungselement (12) zur Aufnahme eines Stiftes oder Bolzens (35) eingerichtet ist, welcher der Ausrichtung des Tragrahmens (5) gegenüber dem Rahmen (2) des Schneidwerks (1) dient.

13. Schneidwerk (1) nach einem der vorangehenden Ansprüche, **dadurch gekennzeichnet, dass** die Antriebsvorrichtung (10) eine Antriebswelle (23) umfasst, an der endseitig ein zweiseitiger Hebel (24) angeordnet ist, dem zur Begrenzung einer durch die Antriebswelle (23) übertragenen Pendelbewegung (38) ein mechanischer Endanschlag (40) zugeordnet ist.

14. Schneidwerk (1) nach Anspruch 13, **dadurch gekennzeichnet, dass** der zwei Arme (41, 42) aufweisende Hebel (24) im Wesentlichen rautenförmig ausgeführt ist und dass der Endanschlag (40) zwei einander gegenüberliegende, geneigte Anschlagflächen (43, 44) aufweist, deren Neigung korrespondierend mit den Neigungen der Arme (41, 42) des zweiseitigen Hebels (24) ausgeführt ist.

## Claims

1. A cutting assembly (1) with a frame (2) and a cutting assembly base disposed thereon, a cutting platform which is disposed in front of the cutting assembly base with a knife bar (3) which is driven in oscillation disposed thereon, a rotatably driven reel which is guided on the cutting assembly base by means of support arms and which can be displaced with respect to the cutting assembly base in or against a direction of mowing, as well as at least one lateral cutting assembly (4) the end of which is releasably disposed on the frame (2) and which extends substantially vertically to the knife bar (3), wherein the lateral cutting assembly (4) comprises a bar rail (6) disposed on a support frame (5), wherein in the longitudinal direction, the bar rail (6) supports, by means of knife retaining means (8), at least one separating knife (7) which is driven in oscillation, and one end of the bar rail is coupled via a drive device (10) to a drive (9) which is connected to the knife bar (3) and produces the oscillating drive movement of the at least one separating knife (7),
wherein the lateral cutting assembly (4) receives at least one first bearing element (11), wherein the at least one first bearing element (11) is configured to dissipate forces generated at the at least one oscillating separating knife (7) distributed over the length of the bar rail (6) out of the bar rail into the support frame (5), **characterized in that** the lateral cutting assembly (4) receives at least one second bearing element (12), wherein the at least one second bearing element (12) is configured to at least damp the vibrations transmitted from the knife bar (3) to the lateral cutting assembly (4).

2. The cutting assembly (1) according to claim 1, **characterized in that** the lateral cutting assembly (4) has two separating knives (7) disposed as twin knives which are each associated with a respective first bearing element (11).

3. The cutting assembly (1) according to claim 1 or claim 2,
**characterized in that** the at least one first bearing element (11) is configured as a linear guide which runs parallel to the bar rail (6), on which a transmission element (22) of the lateral cutting assembly (4), which serves for the transmission of the oscillating drive movement, is guided in the axial direction.

4. The cutting assembly (1) according to claim 3, **characterized in that** the at least one first bearing element (11) restricts the number of degrees of freedom of the bar rail (6) to two translational degrees of freedom.

5. The cutting assembly (1) according to claim 3 or claim 4, **characterized in that** the first bearing element (11) has a guide rod (26) along which the transmission element (22) slides in the axial direction, wherein the guide rod (26) is fixed at its opposite ends to the support frame (5).

6. The cutting assembly (1) according to claim 5, **characterized in that** the first bearing element (11) comprises two fastening points (28) between which the guide rod (26) is disposed, wherein the fastening points (28) are disposed on the support frame (5) at a distance (29) with respect to each other.

7. The cutting assembly (1) according to claim 6, **characterized in that** the distance (29) between the fastening points (28) is larger than the amplitude of the oscillating movement of the separating knife (7).

8. The cutting assembly (1) according to one of the preceding claims, **characterized in that** the at least one second bearing element (12) is configured as a rubber bearing.

9. The cutting assembly (1) according to claim 8, **characterized in that** the second bearing element (12) has an outer sleeve (32) and an inner sleeve (33) produced from metal between which an elastic rubber substance (34) has been compressed or vulcanised.

10. The cutting assembly (1) according to one of the preceding claims, **characterized in that** the support frame (5) is substantially triangular in configuration, wherein a frame segment (13) is disposed at an inclined angle to the bar rail (6) and extends from a lower articulation point (14) in the direction of an upper articulation point (21) on the support frame (5).

11. The cutting assembly (1) according to claim 10, **characterized in that** the at least one second bearing element (12) is disposed on the frame segment (13) below a transition region (30) in which the frame segment (13) and a frame section (20) of the support frame (5) are connected together.

12. The cutting assembly (1) according to claim 11, **characterized in that** the at least one second bearing element (12) is configured to receive a rod or pin (35) which serves to orientate the support frame (5) with respect to the frame (2) of the cutting assembly (1).

13. The cutting assembly (1) according to one of the preceding claims, **characterized in that** the drive device (10) comprises a drive shaft (23) on the end of which a double sided lever (24) is disposed which is associated with a mechanical end stop (40) in order to limit a swinging movement (38) transmitted by the drive shaft (23).

14. The cutting assembly (1) according to claim 13, **characterized in that** the lever (24) with two arms (41, 42) is substantially diamond shaped in configuration and **in that** the end stop (40) has two mutually opposing inclined stop surfaces (43, 44) the inclination of which corresponds in configuration to the inclinations of the arms (41, 42) of the double sided lever (24).

## Revendications

1. Tablier de coupe (1) comprenant un châssis (2) et un bac de tablier de coupe monté dessus, une table de coupe disposée en amont du bac de tablier de coupe avec une barre de coupe (3) montée dessus, entraînée de façon oscillante, un rabatteur entraîné en rotation qui est guidé contre le bac de tablier de coupe au moyen de bras porteurs et est déplaçable par rapport à celui-ci dans ou à l'opposé de la direction de moissonnage, ainsi qu'au moins un tablier de coupe latéral (4) qui est disposé de façon amovible sur le châssis (2) et qui s'étend sensiblement verticalement par rapport à la barre de coupe (3), le tablier de coupe latéral (4) incluant un rail de barre (6) disposé sur le châssis porteur (5), le rail de barre (6) supportant dans la direction longitudinale au moins une scie entraînée de manière oscillante (7) au moyen d'équipements porte-lames (8) et étant couplé par une extrémité, par l'intermédiaire d'un dispositif d'entraînement (10), à une partie menée (9) qui provoque le mouvement d'entraînement oscillant de la au moins une scie (7) et qui est reliée à la barre de coupe (3), le tablier de coupe latéral (4) recevant au moins un premier élément de support (11), le au moins un premier élément de support (11) étant agencé pour dériver des forces survenant sur la au moins une scie oscillante (7), réparties sur la longueur du rail de barre (6), à partir de celui-ci vers le châssis porteur (5), **caractérisé en ce que** le tablier de coupe latéral (4) reçoit au moins un second élément de support (12), le au moins un second élément de support (12) étant agencé pour au moins amortir les oscillations transmises par la barre de coupe (3) au tablier de coupe latéral (4).

2. Tablier de coupe (1) selon la revendication 1, **caractérisé en ce que** le tablier de coupe latéral (4) comporte deux scies (7) disposées en lame double, à chacune desquelles est associé un premier élément de support (11).

3. Tablier de coupe (1) selon la revendication 1 ou 2, **caractérisé en ce que** le au moins un premier élément de support (11) est conformé en guide linéaire qui s'étend parallèlement au rail de barre (6) et sur lequel est guidé dans la direction axiale un élément de transmission (22) du tablier de coupe latéral (4) servant à la transmission du mouvement d'entraînement oscillant.

4. Tablier de coupe (1) selon la revendication 3, **caractérisé en ce que** le au moins un premier élément de support (11) limite le nombre de degrés de liberté du rail de barre (6) à deux degrés de liberté de translation.

5. Tablier de coupe (1) selon la revendication 3 ou 4, **caractérisé en ce que** le premier élément de support (11) comporte une tige de guidage (26) le long de laquelle l'élément de transmission (22) glisse dans la direction axiale, la tige de guidage (26) étant immobilisée sur le châssis porteur (5) à ses deux extrémités opposées.

6. Tablier de coupe (1) selon la revendication 5, **caractérisé en ce que** le premier élément de support (11) inclut deux points de fixation (28) entre lesquels la tige de guidage (26) est disposée, les points de fixation (28) étant disposés avec un écartement (29) l'un par rapport à l'autre sur le châssis porteur (5).

7. Tablier de coupe (1) selon la revendication 6, **caractérisé en ce que** l'écartement (29) des points de fixation (28) l'un par rapport à l'autre est supérieur à l'amplitude du mouvement oscillant de la scie (7).

8. Tablier de coupe (1) selon une des revendications précédentes, **caractérisé en ce que** le au moins un second élément de support (12) est conformé en support en caoutchouc.

9. Tablier de coupe (1) selon la revendication 8, **caractérisé en ce que** le second élément de support (12) comporte un manchon extérieur (32) et un manchon intérieur (33) en métal entre lesquels un matériau caoutchouteux (34) est inséré par pressage ou par vulcanisation.

10. Tablier de coupe (1) selon une des revendications précédentes, **caractérisé en ce que** le châssis porteur (5) est conformé sensiblement en triangle, un segment de châssis (13) étant disposé en biais selon un angle par rapport au rail de barre (6) et s'étendant d'un point d'articulation inférieur (14) en direction d'un point d'articulation supérieur (21) sur le châssis porteur (5).

11. Tablier de coupe (1) selon la revendication 10, **caractérisé en ce que** le au moins un second élément de support (12) est disposé sur le segment de châssis (13) au-dessous d'une zone de transition (30) dans laquelle le segment de châssis (13) et une portion de châssis (20) du châssis porteur (5) sont reliés entre eux.

12. Tablier de coupe (1) selon la revendication 11, **caractérisé en ce que** le au moins un second élément de support (12) est agencé pour recevoir une broche ou un goujon (35) qui sert à orienter le châssis porteur (5) par rapport au châssis (2) du tablier de coupe (1).

13. Tablier de coupe (1) selon une des revendications précédentes, **caractérisé en ce que** le dispositif d'entraînement (10) inclut un arbre d'entraînement (23) sur lequel est disposé, en bout, un levier en deux parties (24) auquel est associée une butée d'extrémité mécanique (40) pour limiter un mouvement pendulaire (38) transmis par l'intermédiaire de l'arbre d'entraînement (23).

14. Tablier de coupe (1) selon la revendication 13, **caractérisé en ce que** le levier (24) comportant deux bras (41, 42) est conformé sensiblement en losange, et **en ce que** la butée d'extrémité (40) comporte deux surfaces de butée inclinées opposées (43, 44) dont l'inclinaison est conçue de manière correspondante aux inclinaisons des bras (41, 42) du levier en deux parties (24).
